# EUROPEAN PATENT SPECIFICATION

(11) **EP 2 490 283 B1**
(45) Date of publication and mention of the grant of the patent: **21.11.2018**
(21) Application number: 12152201.5
(22) Date of filing: 24.01.2012
(51) Int. Cl.: H01M 2/04, H01M 2/06, H01M 2/20, H01M 2/30, H01M 2/12

(54) **Rechargeable battery**
Wiederaufladbare Batterie
Batterie rechargeable

(30) Priority: 18.02.2011 US 201161444598 P; 02.09.2011 US 201113225277
(43) Date of publication of application: 22.08.2012
(73) Proprietor: Samsung SDI Co., Ltd., Gyeonggi-do (KR); Robert Bosch GmbH, 70442 Stuttgart (DE)
(72) Inventor: Kim, Dukjung, Yongin-si (KR)
(74) Representative: Gulde & Partner

(56) References cited:
- EP-A1- 2 207 225
- KR-A- 20060 037 597
- KR-B1- 100 749 635
- US-A1- 2006 115 727

## Description

The present invention relates to a rechargeable battery.

### Related Art

Unlike a primary battery that is not chargeable, a rechargeable battery is rechargeable. Small capacity batteries each having a single unit cell are generally used for various portable electronic devices such as phones, laptop computers, and camcorders. Large capacity batteries each having a plurality of unit cells are generally used as the power source for driving motors, such as those in electric scooters, hybrid electric vehicles, or electric motor vehicles.

Rechargeable batteries are manufactured in various shapes exemplified by cylindrical and prismatic types. The rechargeable battery is constructed by accommodating an electrode assembly including a positive electrode plate, a negative electrode plate and a separator serving as an insulator interposed therebetween, and an electrolyte in a can or case, and installing a cap plate on the case. A positive electrode terminal and a negative electrode terminal are connected to the electrode assembly, which is then exposed or protruded to the outside through the cap plate.

Rechargeable batteries are disclosed in e.g. US 2006/115727 A1, EP 2 207 225 A1, KR 2006 0037597 A and KR 100 749 635 B1.

### SUMMARY

The invention provides a battery according to claim 1.

An aspect of an embodiment of the present invention is directed toward a rechargeable battery, which can reduce the number of parts necessary for connecting rechargeable batteries and can simplify a manufacturing process of the rechargeable battery. An aspect of an embodiment of the present invention is directed toward a rechargeable battery, which can increase a coupling force between each of first and second coupling terminals and a bus bar. An aspect of an embodiment of the present invention is directed toward a rechargeable battery structure, which can enhance electrical reliability between rechargeable batteries or between a rechargeable battery and an external device.

Some of the above and other features and aspects of the present invention may be realized by providing a rechargeable battery according to claim 1.

Further aspects of the invention could be learned from the following description of the dependent claims.

In a rechargeable battery according to an embodiment of the present invention, since first and second coupling terminals are coupled to first and second collecting terminals through first and second collecting terminal holes and including first and second threads, a bus bar for connecting rechargeable batteries can be connected to the first and second coupling terminals using nuts. Therefore, the number of parts necessary for connecting rechargeable batteries can be reduced and a manufacturing process of the rechargeable battery can be simplified.

In addition, in a rechargeable battery according to another embodiment of the present invention, a first rotation-preventing protrusion is formed in a first coupling terminal, and a second rotation-preventing groove is formed in a second coupling terminal, thereby fixing the first coupling terminal and the second coupling terminal to the cap plate and the upper insulating member, respectively. Therefore, a coupling force between each of the first and second coupling terminals and a bus bar can be increased by coupling the nut to each of the first and second coupling terminals with a high torque without affecting the first and second collecting terminals.

Further, in a rechargeable battery according to yet another embodiment, a wide contact area between the first collecting terminal and the nut can be secured through a first base portion and a first extending portion, and a wide contact area between the second collecting terminal and the nut can be secured through a second base portion and a second extending portion. Therefore, electrical reliability between rechargeable batteries or between a rechargeable battery and an external device can be enhanced.

### BRIEF DESCRIPTION OF THE DRAWINGS

FIG. 1 is a perspective view of a rechargeable battery according to an embodiment of the present invention;
FIG. 2 is a cross-sectional view taken along the line I-I' shown in FIG. 1;
FIG. 3 is an exploded perspective view of a portion 'A' shown in FIG. 2;
FIG. 4 is an exploded perspective view of a portion 'B' shown in FIG. 2;
FIGS. 5A through 5C illustrate sequential processing steps of a method of manufacturing a terminal of a rechargeable battery according to an embodiment of the present invention;
FIG. 6 illustrates a method of coupling a bus bar and a rechargeable battery according to an embodiment of the present invention; and
FIG. 7 is a cross-sectional view illustrating a bus bar coupled to a rechargeable battery according to an embodiment of the present invention.

### DETAILED DESCRIPTION

Hereinafter, examples of embodiments of the invention will be described in detail with reference to the accompanying drawings such that they can be made and used by those of ordinary skill in the art.

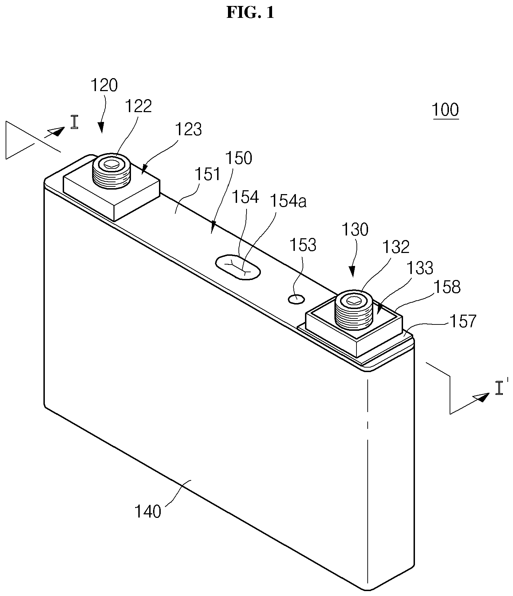

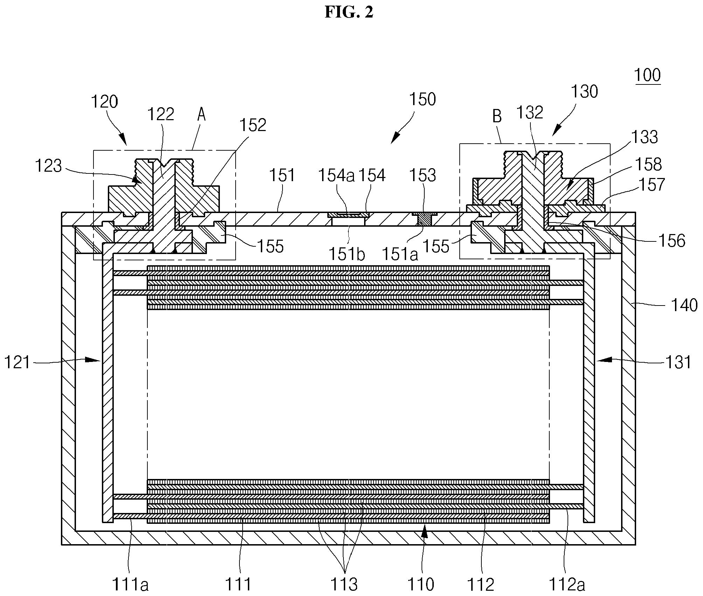

FIG. 1 is a perspective view of a rechargeable battery according to an embodiment of the present invention, FIG. 2 is a cross-sectional view taken along the line I-I' shown in FIG. 1,

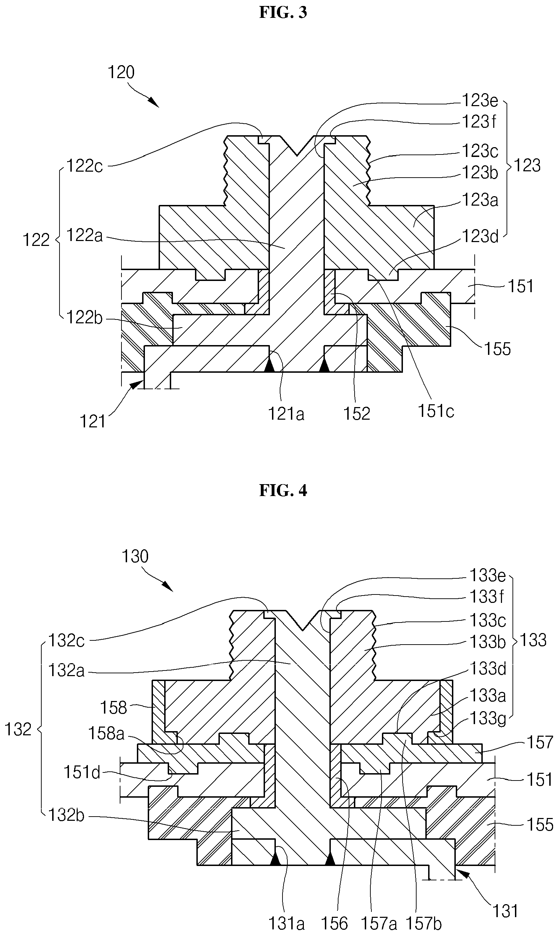

FIG. 3 is an exploded perspective view of a portion 'A' shown in FIG. 2, and FIG. 4 is an exploded perspective view of a portion 'B' shown in FIG. 2.

As shown in FIGS. 1 through 4, the rechargeable battery 100 according to the illustrated embodiment includes an electrode assembly 110, a first terminal 120, a second terminal 130, a case 140, and a cap assembly 150. The electrode assembly 110 is formed by winding or laminating a stacked structure including a first electrode plate 111 shaped of a thin plate or layer, a separator 113, and a second electrode plate 112. Here, the first electrode plate 111 may act as a positive electrode, and the second electrode plate 112 may act as a negative electrode, or vice versa. In other embodiments, polarities of the first and second electrode plates 111 and 112 may be reversed.

The first electrode plate 111 is formed by coating a first electrode active material such as a transition metal oxide on a first electrode collector formed of a metal foil such as aluminum, and includes a first electrode uncoated portion 111a that is not coated with the first electrode active material. The first electrode uncoated portion 111a provides a path for a current flowing between the first electrode plate 111 and the outside of the first electrode plate 111. In other embodiments, the material of the first electrode plate 111 is not limited to the example material illustrated herein.

The second electrode plate 112 is formed by coating a second electrode active material such as graphite or carbon on a second electrode collector formed of a metal foil such as copper or nickel, and includes a second electrode uncoated portion 112a that is not coated with the second electrode active material. The second electrode uncoated portion 112a provides a path for a current flowing between the second electrode plate 112 and the outside of the second electrode plate 112. In other embodiments, the material of the second electrode plate 112 is not limited to the example materials illustrated herein.

The separator 113, disposed between the first electrode plate 111 and the second electrode plate 112, serves to prevent or reduce electrical shorts and allow the movement of, for example, lithium ions (e.g., part of the electrolyte in a lithium-ion battery). The separator 113 may be made of polyethylene, polypropylene, or a composite film of polyethylene and polypropylene. In other embodiments, the material of the separator 113 is not limited to the example materials illustrated herein.

The electrode assembly 110 is accommodated in the case 140 together with an electrolyte. The electrolyte may include an organic solvent such as EC (ethylene carbonate), PC (propylene carbonate), DEC (diethyl carbonate), EMC (ethyl methyl carbonate), or DMC (dimethyl carbonate), and a lithium salt such as LiPF₆ or LiBF₄. In addition, the electrolyte may be in a liquid, solid, or gel phase.

The first terminal 120 and the second terminal 130 are electrically connected to the first electrode plate 111 and the second electrode plate 112, respectively, and are coupled to both ends of the electrode assembly 110. The first terminal 120 may be generally made of a metal or equivalents thereof, and is electrically connected to the first electrode plate 111. The first terminal 120 includes a first collecting plate 121, a first collecting terminal 122, and a first coupling terminal 123.

The first collecting plate 121 contacts the first electrode uncoated portion 111a protruding toward one end of the electrode assembly 110. In practice, the first collecting plate 121 is welded to the first electrode uncoated portion 111a. The first collecting plate 121 is formed in a substantially '┌' shape, and has a terminal hole 121a formed at its top surface. The first collecting terminal 122 is fitted into the terminal hole 121a to be engaged. The first collecting plate 121 is made of, for example, aluminum or an aluminum alloy, but embodiments of the present invention are not limited to the material of the first collecting plate 121 to those listed herein.

The first collecting terminal 122 passes through a cap plate 151 to be described later, and protrudes and extends with a length (for example, a predetermined length) upwardly. In addition, the first collecting terminal 122 is electrically connected to the first collecting plate 121 under the cap plate 151. The first collecting terminal 122 may be made of, for example, at least one selected from aluminum, an aluminum alloy, and equivalents thereof, but embodiments of the present invention are not limited to the material of the first collecting terminal 122 to those listed herein. Specifically, the first collecting terminal 122 includes a first body 122a, a first flange 122b, and a first fixing portion 122c.

The first body 122a is divided into an upper pillar protruding toward an upper portion of the cap plate 151, and a lower pillar connected to a lower portion of the upper pillar and extended toward a lower portion of the cap plate 151. Here, the first body 122a may be shaped of a cylinder, but in other embodiments, the shape of the first body 122a is not limited thereto.

The first flange 122b extends in a horizontal direction from a side portion of the lower pillar of the first body 122a. The first flange 122b serves to prevent or protect the first collecting terminal 122 from varying from the cap plate 151. Further, in the lower portion of the lower pillar of the first body 122a, the portion connected to the lower portion of the first flange 122b is fitted into the first terminal hole 121a of the first collecting plate 121 to then be welded.

The first fixing portion 122c extends in a horizontal direction from a side portion of a top end of the upper pillar of the first collecting terminal 122. The first fixing portion 122c fixes the first collecting terminal 122 on the first coupling terminal 123. Here, the first fixing portion 122c may be formed by riveting the top end of the upper pillar of the first collecting terminal 122.

The first coupling terminal 123 is disposed on the cap plate 151 and allows the upper pillar of the first collecting terminal 122 to pass therethrough to then be coupled thereto. The first coupling terminal 123 is formed substantially in a bolt shape. The first coupling terminal 123 is connected both electrically and mechanically to the first collecting terminal 122 and the cap plate 151. The first coupling terminal 123 may be made of at least one selected from aluminum, an aluminum alloy, and equivalents thereof, but embodiments of the present invention are not limited to the material of the first coupling terminal 123 thereto. Specifically, the first coupling terminal 123 includes a first base portion 123a, a first extending portion 123b, a first thread 123c, a first rotation-preventing protrusion 123d, a first collecting terminal hole 123e, and a first fixing groove 123f.

The first base portion 123a is a portion contacting the cap plate 151, and stably places the first coupling terminal 123 on the cap plate 151. In order to increase a contact area between the first coupling terminal 123 and the cap plate 151, the first base portion 123a has the largest (cross-sectional) area or diameter (for example, in a cross section parallel to the cap plate 151) in the first coupling terminal 123. Here, the first base portion 123a may be shaped of a square pillar, but in other embodiments, the shape of the first base portion 123a is not limited thereto.

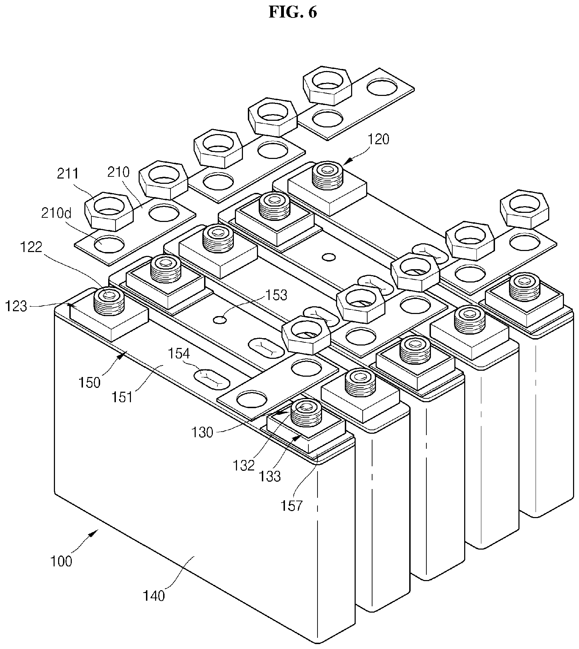

The first extending portion 123b upwardly extends from the first base portion 123a, and has a smaller (cross-sectional) area or diameter than the first base portion 123a. A nut (see, for example, nut 211 of FIG. 6) for connecting a bus bar (see, for example, bus bar 210 of FIG. 6) with the first coupling terminal 123 may be disposed in a space created by a difference in the (cross-sectional) area between the first extending portion 123b and the first base portion 123a. Here, the first extending portion 123b may be shaped of a cylinder, but in other embodiments, the shape of the first extending portion 123b is not limited thereto.

The first thread 123c is formed on the outer surface of a partial portion of the first coupling terminal 123, for example, the outer surface of the first extending portion 123b. The first thread 123c guides the nut (see nut 211 of FIG. 6) to be coupled to the first coupling terminal 123.

The first rotation-preventing protrusion 123d is formed on a bottom surface of the first base portion 123a and is engaged with a rotation-preventing groove 151c of the cap plate 151. The first rotation-preventing protrusion 123d serves to prevent or protect the first coupling terminal 123 from rotating (with respect to the cap plate) when the nut (see nut 211 of FIG. 6) is coupled (or being coupled) to the first coupling terminal 123.

There may be a plurality of first rotation-preventing protrusions 123d formed on the bottom surface of the first base portion 123a, for engaging with a corresponding plurality of rotation-preventing grooves 151c of the cap plate 151. In other embodiments, one or more first rotation-preventing protrusions 123d may be replaced with rotation-preventing grooves, for engaging with corresponding rotation-preventing protrusions of the cap plate 151.

The first collecting terminal hole 123e is formed in the first base portion 123a and the first extending portion 123b. The first collecting terminal hole 123e provides for a space through which the upper pillar of the first collecting terminal 122 passes.

The first fixing groove 123f is formed at a top end of the first extending portion 123b and has a larger diameter than the first collecting terminal hole 123e. The first fixing groove 123f provides for a space in which the first fixing portion 122c is fitted for the first coupling terminal 123 to be fixed (for example, riveted) to the first collecting terminal 122.

The first coupling terminal 123 having the aforementioned configuration is electrically and mechanically coupled to the nut (see nut 211 of FIG. 6) for connecting not only the first collecting terminal 122 but also the bus bar (see bus bar 210 of FIG. 6) to the first coupling terminal 123. Accordingly, the first coupling terminal 123 can reduce the number of parts necessary for connecting rechargeable batteries, and a manufacturing process of the rechargeable battery can be simplified.

In addition, the first coupling terminal 123 is secured to the cap plate 151 through the first rotation-preventing protrusion 123d. Accordingly, the nut (see nut 211 of FIG. 6) for connecting the bus bar (see bus bar 210 of FIG. 6) to the first coupling terminal 123 can be engaged (or tightened) with the first coupling terminal 123 with a high torque without affecting the position of the first collecting terminal 122, thereby increasing a coupling force of the bus bar (see bus bar 210 of FIG. 6).

Further, the first coupling terminal 123 secures wider contact areas between each of the first collecting terminal 122, the cap plate 151, and the nut (see nut 211 of FIG. 6) by the first base portion 123a and the first extending portion 123b, thereby enhancing electrical reliability between interconnected rechargeable batteries or between a rechargeable battery and an external device.

Like the first terminal 120, the second terminal 130 may generally be made of a metal and equivalents thereof, and is electrically connected to the second electrode plate 112. The second terminal 130 includes a second collecting plate 131, a second collecting terminal 132, and a second coupling terminal 133.

The second collecting plate 131 contacts the second electrode uncoated portion 112a protruding toward the other end of the electrode assembly 110. In practice, the second collecting plate 131 is welded to the second electrode uncoated portion 112a. The second collecting plate 131 is formed in a substantially '┐' shape, and has a second terminal hole 131a formed at its top surface. The second collecting terminal 132 is fitted into the terminal hole 131a to be engaged. The second collecting plate 131 is made of, for example, copper or a copper alloy, but embodiments of the present invention are not limited to the material of the second collecting plate 131 to those listed herein.

The second collecting terminal 132 passes through the cap plate 151, and protrudes and extends with a length (for example, a predetermined length) upwardly. In addition, the second collecting terminal 132 is electrically connected to the second collecting plate 131 under the cap plate 151. The second collecting terminal 132 may be made of, for example, at least one selected from copper or a copper alloy, and equivalents thereof, but embodiments of the present invention are not limited to the material of the second collecting terminal 132 to those listed herein. Specifically, the second collecting terminal 132 includes a second body 132a, a second flange 132b, and a second fixing portion 132c.

The second body 132a is divided into an upper pillar and a lower pillar. Since the second body 132a is substantially the same as the first body 122a, a detailed description thereof will not be repeated. In addition, since the second flange 132b is substantially the same as the first flange 122b, a detailed description thereof will not be repeated. Further, in the lower pillar of the second body 132a, a portion connected to the lower portion of the second flange 132b is fitted into the second terminal hole 131a of the second collecting plate 131 to then be welded. Since the second fixing portion 132c is substantially the same as the first fixing portion 122c, a detailed description thereof will not be repeated.

The second coupling terminal 133 is disposed on the cap plate 151, specifically on a top surface of an upper insulating member 157, and allows the upper pillar of the second collecting terminal 132 to pass therethrough to then be coupled thereto. The second coupling terminal 133 is formed substantially in a bolt shape. The second coupling terminal 133 is electrically connected to the second collecting terminal 132 and is electrically insulated from the cap plate 151 by the upper insulating member 157. The second coupling terminal 133 may be made of copper, a copper alloy, and equivalents thereof. Specifically, the second coupling terminal 133 includes a second base portion 133a, a second extending portion 133b, a second thread 133c, a second rotation-preventing groove 133d, a second collecting terminal hole 133e, a second fixing groove 133f, and a second coupling groove 133g.

The second base portion 133a is a portion contacting the upper insulating member 157. In order to stably place the second coupling terminal 133 on the upper insulating member 157, the second base portion 133a has the largest (cross-sectional) area or diameter (for example, in a cross section parallel to the cap plate 151) in the second coupling terminal 133. Here, the second base portion 133a may be shaped of a square pillar, but in other embodiments, the shape of the second base portion 133a is not limited thereto. In addition, the second base portion 133a contacts the upper insulating member 157, rather than the cap plate 151, because the second coupling terminal 133 and the cap plate 151 are configured to have different polarities.

The second extending portion 133b upwardly extends from the second base portion 133a, and has a smaller (cross-sectional) area or diameter than the second base portion 133a. A nut (see nut 211 of FIG. 6) for connecting a bus bar (see bus bar 210 of FIG. 6) with the second coupling terminal 133 may be disposed in a space created by a difference in the (cross-sectional) area between the second extending portion 133b and the second base portion 133a. Here, the second extending portion 133b may be shaped of a cylinder, but in other embodiments, the shape of the second extending portion 133b is not limited thereto.

The second thread 133c is formed on the outer surface of a partial portion of the second collecting terminal 132, for example, the outer surface of the second extending portion 133b. The second thread 133c guides the nut (see nut 211 of FIG. 6) to be coupled to the second coupling terminal 133.

The second rotation-preventing groove 133d is formed on a bottom surface of the second base portion 133a and is engaged with a second protrusion 157b formed on a top surface of the upper insulating member 157. The second rotation-preventing groove 133d serves to prevent or protect the second coupling terminal 133 from rotating (with respect to the upper insulating member 157) when the nut (see nut 211 of FIG. 6) is coupled (or being coupled) to the second coupling terminal 133.

There may be a plurality of second rotation-preventing grooves 133d formed on the bottom surface of the second base portion 133a, for engaging with a corresponding plurality of second protrusions 157b on the top surface of the upper insulating member 157. In other embodiments, one or more second rotation-preventing grooves 133d may be replaced with rotation-preventing protrusions, for engaging with corresponding grooves on the top surface of the upper insulating member 157.

The second collecting terminal hole 133e is formed in the second base portion 133a and the second extending portion 133b. The second collecting terminal hole 133e provides for a space through which the upper pillar of the second collecting terminal 132 passes.

The second fixing groove 133f is formed at a top end of the second extending portion 133b and has a larger diameter than the second collecting terminal hole 133e. The second fixing groove 133f provides for a space in which the second fixing portion 132c is fitted for the second coupling terminal 133 to be fixed (for example, riveted) to the second collecting terminal 132.

The second coupling groove 133g is formed at a contact portion between an outer edge of the second base portion 133a and the upper insulating member 157, and is engaged with a protrusion 158a of an insulating lid 158. The second coupling groove 133g allows the insulating lid 158 to be coupled to the second coupling terminal 133.

The second coupling terminal 133 having the above-described configuration is electrically and mechanically coupled to the nut (see nut 211 of FIG. 6) for connecting not only the second collecting terminal 132 but also a bus bar (see bus bar 210 of FIG. 6) to the second coupling terminal 133. Accordingly, the second coupling terminal 133 can reduce the number of parts necessary for connecting rechargeable batteries, and a manufacturing process of the rechargeable battery can be simplified.

In addition, the second coupling terminal 133 is secured to the upper insulating member 157 through the second rotation-preventing groove 133d. Accordingly, the nut (see nut 211 of FIG. 6) for connecting the bus bar (see bus bar 210 of FIG. 6) to the second coupling terminal 133 can be engaged (or tightened) with the second coupling terminal 133 with a high torque without affecting the position of the second collecting terminal 132, thereby increasing a coupling force of the bus bar (see bus bar 210 of FIG. 6).

Further, the second coupling terminal 133 secures a wider contact area between the second collecting terminal 132 and the nut (see nut 211 of FIG. 6) by the second base portion 133a and the second extending portion 133b, thereby enhancing electrical reliability between interconnected rechargeable batteries or between a rechargeable battery and an external device.

The case 140 is made of a conductive metal such as aluminum, an aluminum alloy or nickel-plated steel, and has a substantially hexahedral shape having an opening in which the electrode assembly 110, the first terminal 120 and the second terminal 130 are inserted and seated. Since FIGS. 1-2 show the case 140 being coupled to the cap assembly 150, the opening is not illustrated in FIGS. 1-2. However, the opening is a substantially opened portion of the periphery of the cap assembly 150. The interior surface of the case 140 is insulated, so that the case 140 can be insulated from the electrode assembly 110, the first terminal 120, the second terminal 130, and the cap assembly 150.

The cap assembly 150 is coupled to the case 140. In more detail, the cap assembly 150 includes a cap plate 151, a connection plate 152, a plug 153, a safety vent 154, a lower insulating member 155, a sealing gasket 156, an upper insulating member 157, and an insulating lid 158.

The cap plate 151 seals an opening of the case 140 and may be made of the same material as the case 140. The cap plate 151 includes an electrolyte injection hole 151a, a vent hole 151b, a rotation-preventing groove 151c, and a coupling groove 151d. For example, the cap plate 151 may be coupled to the case 140 by laser welding. Since the cap plate 151 may have the same polarity as the first electrode plate 111 and the first terminal 120, the cap plate 151 and the case 140 may have the same polarity.

The connection plate 152 is formed at a portion of the cap plate 151, through which the first collecting terminal 122 passes. The connection plate 152 electrically connects the first collecting terminal 122 and the cap plate 151 to each other.

The plug 153 seals the electrolyte injection hole 151a of the cap plate 151. The safety vent 154 is installed in the vent hole 151b of the cap plate 151 and includes a notch 154a formed to open at a pressure (for example, a predetermined pressure).

The lower insulating member 155 is formed between the cap plate 151 and each of the first collecting plate 121 and the second collecting plate 131. The lower insulating member prevents or protects from unintended electrical shorts. That is, the lower insulating member 155 prevents or protects from an electrical short between the first collecting plate 121 and the cap plate 151, and between the second collecting plate 131 and the cap plate 151. In addition, the lower insulating member 155 is formed between the cap plate 151 and each of the first collecting terminal 122 and the second collecting terminal 132, thereby preventing or protecting from unintended electrical shorts between each of the first collecting terminal 122 and the second collecting terminal 132, and the cap plate 151.

The sealing gasket 156 is formed between the second collecting terminal 132 and the cap plate 151 using an insulating material, and seals a region therebetween. The sealing gasket 156 prevents or protects from external moisture from permeating into the rechargeable battery 100 and the electrolyte contained in the rechargeable battery 100 from flowing out.

The upper insulating member 157 is formed between the second coupling terminal 133 and the cap plate 151. That is, the upper insulating member 157 is coupled to the cap plate 151. To this end, the upper insulating member 157 includes a first protrusion 157a formed on a bottom surface of the upper insulating member 157 and coupled to the coupling groove 151d of the cap plate 151. The first protrusion 157a serves to prevent or protect the upper insulating member 157 from rotating (with respect to the cap plate) when the nut (see nut 211 of FIG. 6) is coupled (or being coupled) to the second coupling terminal 133.

There may be a plurality of first protrusions 157a formed on the bottom surface of the upper insulating member 157, for engaging with a corresponding plurality of coupling grooves 151d of the cap plate 151. In other embodiments, one or more first protrusions 157a may be replaced with grooves, for engaging with corresponding coupling protrusions of the cap plate 151.

In addition, the upper insulating member 157 is coupled to the second coupling terminal 133. To this end, the upper insulating member 157 includes a second protrusion 157b formed on a top surface of the upper insulating member 157 and coupled to the second rotation-preventing groove 133d of the second coupling terminal 133. In addition, the upper insulating member 157 is closely adhered to sealing gasket 156. The upper insulating member 157 insulates the second coupling terminal 133 from the cap plate 151.

The insulating lid 158 is formed on the upper insulating member 157 to surround the outer side surface of the second base portion 133a of the second coupling terminal 133. The insulating lid 158 is made of an insulating material and prevents or protects from an unintended electrical short between the second coupling terminal 133 and an external device. Here, the insulating lid 158 includes a protrusion 158a formed at its bottom end. The protrusion 158a is engaged with a second coupling groove 133g of the second coupling terminal 133, thereby coupling the insulating lid 158 to the second coupling terminal 133.

As described above, the rechargeable battery 100 according to the illustrated embodiment of FIGS. 1-4 includes the first and second coupling terminals 123 and 133 coupled to the first and second collecting terminals 122 and 132 through the first and second collecting terminal holes 122e and 132e and including the first and second threads 123c and 133c, respectively, thereby connecting the bus bar (see bus bar 210 of FIG. 6) for connecting rechargeable batteries to the first and second coupling terminals 123 and 133 using nuts (see nuts 211 of FIG. 6). Therefore, according to the rechargeable battery 100 of this embodiment of the present invention, the number of parts necessary for connecting rechargeable batteries can be reduced and a manufacturing process of the rechargeable battery can be simplified.

In addition, in the rechargeable battery 100 according to this embodiment, the first rotation-preventing protrusion 123d is formed in the first coupling terminal 123, and the second rotation-preventing groove 133d is formed in the second coupling terminal 133, thereby fixing the first coupling terminal 123 and the second coupling terminal 133 to the cap plate 151 and the upper insulating member 157, respectively. Therefore, the nut (see nut 211 of FIG. 6) for connecting the bus bar (see bus bar 210 of FIG. 6) to the first coupling terminal 123 or the second coupling terminal 133 can be engaged with (or tightened to) the first coupling terminal 123 or the second coupling terminal 133 with a high torque without affecting the position of the first coupling terminal or the second collecting terminal 132, thereby increasing a coupling force of the bus bar (see bus bar 210 of FIG. 6)

Further, in the rechargeable battery according to this embodiment, a wide contact area between the first collecting terminal 122 and the nut (see nut 211 of FIG. 6) can be secured through the first base portion 123a and the first extending portion 123b, and a wide contact area between the second collecting terminal 132 and the nut (see nut 211 of FIG. 6) can be secured through the second base portion 133a and the second extending portion 133b. Therefore, the rechargeable battery according to this embodiment can enhance electrical reliability between interconnected rechargeable batteries or between a rechargeable battery and an external device.

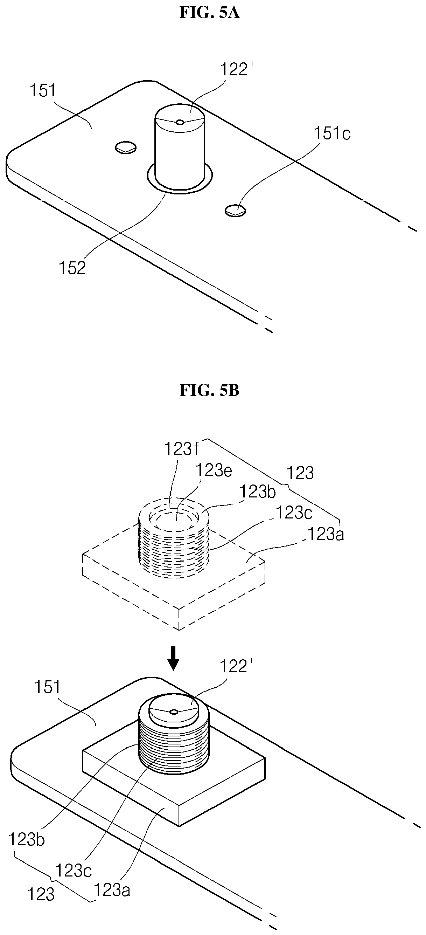

FIGS. 5A through 5C illustrate sequential processing steps of a method of manufacturing a terminal of a rechargeable battery according to an embodiment of the present invention. In the following, the method of manufacturing the terminal of the rechargeable battery will be described with regard to the first terminal 120, simply by way of example.

As shown in FIG. 5A, a first collecting terminal 122' shaped of a pillar is coupled to a cap plate 151. The first collecting terminal 122' is electrically connected to the cap plate 151 by a connection plate 152. Here, a rotation-preventing groove 151c is formed on a surface of the cap plate 151, and the rotation-preventing groove 151c is engaged with a first rotation-preventing protrusion (see first rotation-preventing protrusion 123d of FIG. 3) formed on a bottom surface of the first coupling terminal 123.

In addition, in a case of a second terminal (see second terminal 130 of FIG. 4), a second collecting terminal shaped of a pillar is coupled to the cap plate 151. Here, the pillar-shaped second collecting terminal and the cap plate 151 are electrically insulated from each other by a sealing gasket (see sealing gasket 156 of FIG. 4). In addition, an upper insulating member (see upper insulating member 157 of FIG. 4) is coupled to a portion of the cap plate 151, where the pillar-shaped second collecting terminal is positioned.

As shown in FIG. 5B, the first coupling terminal 123 is coupled to the first collecting terminal 122'. In other words, a first coupling terminal hole 123e is formed in the first coupling terminal 123, and the first collecting terminal 122' passes through the first coupling terminal hole 123e to then be coupled thereto.

The first coupling terminal 123 is fixed to the cap plate 151 through the first rotation-preventing protrusion (see first rotation-preventing protrusion 123d of FIG. 3). Thus, the first coupling terminal 123 does not rotate about the first collecting terminal 122'. Here, a top end of the first collecting terminal 122' upwardly extends and is exposed.

In addition, in a case of the second terminal (see second terminal 130 of FIG. 4), a second coupling terminal (see second coupling terminal 133 of FIG. 4) is coupled to the pillar-shaped second collecting terminal.

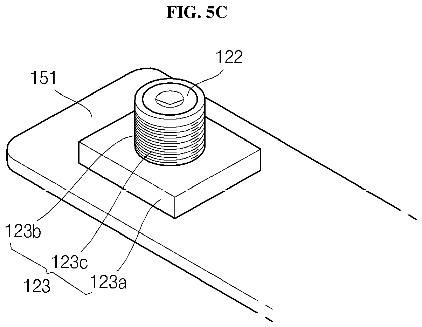

As shown in FIG. 5C, the top end of the first collecting terminal 122' is riveted by a riveting tool, thereby forming a first collecting terminal 122 that hangs over and is fixed to a first fixing groove 123f of the first coupling terminal 123. Therefore, the first collecting terminal 122 is completely fixed to the first coupling terminal 123 both electrically and mechanically.

In addition, in a case of the second terminal (see second terminal 130 of FIG. 4), a top end of the second collecting terminal is riveted by a riveting tool, thereby forming the second collecting terminal (see second collecting terminal 132 of FIG. 4). An insulating lid (see insulating lid 158 of FIG. 4) is coupled to the second coupling terminal (see second coupling terminal 133 of FIG. 4). For example, the insulating lid is made of a flexible material, the insulating lid may be coupled to the second coupling terminal after the forming of the second collecting terminal.

FIG. 6 illustrates a method of coupling a bus bar and a rechargeable battery according to an embodiment of the present invention.

As shown in FIG. 6, a plurality of rechargeable batteries 100 may be connected in series and/or parallel by a conductive bus bar 210. Here, throughholes 210d are formed at both sides of the bus bar 210, and the first coupling terminal 123 and the second coupling terminal 133 provided in each of the plurality of rechargeable batteries 100 are coupled to the throughholes 210d. In addition, nuts 211 are coupled to the first coupling terminal 123 and the second coupling terminal 133 passing through the bus bar 210 with a high torque. Therefore, the bus bar 210 is firmly adhered to the first and second coupling terminals 123 or 133 while being coupled to the first coupling terminal 123 or the second coupling terminal 133 using the nuts 211.

In such a manner, since the bus bar 210 is firmly coupled to the first and second coupling terminals 123 and 133 using the nuts 211, a coupling force between the bus bar 210 and each of the first and second coupling terminals 123 and 133 can be enhanced. In addition, a relatively large current path is formed through the first and second collecting terminals 122 and 132, and the bus bar 210, thereby reducing the electrical resistance of the first or second terminal 120, 130.

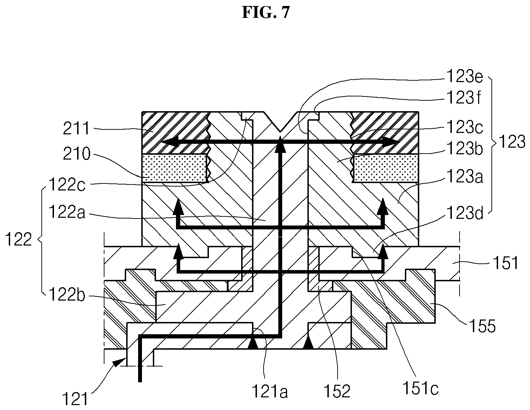

FIG. 7 is a cross-sectional view illustrating a bus bar coupled to a rechargeable battery according to an embodiment of the present invention. In the following, the coupling state will be described with regard to a first terminal 120, simply by way of example.

As shown in FIG. 7, the bus bar 210 is coupled to the first coupling terminal 123. That is, an extending portion 123b of the first coupling terminal 123 passes through a throughhole 210d of the bus bar 210. In addition, the extending portion 123b corresponding to an upper portion of the bus bar 210 is coupled to the nut 211, thereby allowing the bus bar 210 to be firmly adhered to the first coupling terminal 123. Therefore, since the first coupling terminal 123 having a relatively large sectional area is interposed between the first collecting terminal 122 and the bus bar 210, a current path therebetween is increased and contact resistance therebetween is reduced accordingly.

In addition, the nut 211 can be tightened in the first extending portion 123b with a relatively high torque. That is, even if a high torque is applied to the nut 211, the first collecting terminal 122 is not adversely affected. In other words, when a sufficiently large amount of torque is applied to the nut 211, the torque is transferred only to the first coupling terminal 123. However, the torque applied to the first coupling terminal 123 is not transferred to the first collecting terminal 122. Therefore, the nut 211 can be tightened with a higher torque than in a conventional case. Accordingly, an assembling strength between the bus bar 210 and each of the first terminal 120 and second terminal 130 can be enhanced, and resistance against vibration and impact can be increased.

## Claims

1. A rechargeable battery (100) comprising:
an electrode assembly (110);
a battery terminal (120, 130) electrically coupled to the electrode assembly (110);
a case (140) accommodating the electrode assembly (110); and
a cap assembly (150) comprising a cap plate (151) for sealing the case (140),
wherein the battery terminal (120, 130) comprises:
a collecting plate (121, 131) electrically coupled to the electrode assembly (110);
a collecting terminal (122, 132) electrically coupled to the collecting plate (121, 131), the collecting terminal (122, 132) having a body (122a, 132a) passing through the cap plate (151); and
a coupling terminal (123, 133) electrically and mechanically coupled to the body (122a, 132a),
wherein the coupling terminal (123, 133) has:
a collecting terminal hole (123e, 133e) for passing the body (122a, 132a) therethrough;
a thread (123c, 133c) for electrically coupling the coupling terminal (123, 133) to another rechargeable battery or an external device; and
a rotation-preventing member, wherein
the battery comprises a first battery terminal (120) and a second battery terminal (130), and
the cap assembly (150) further comprises:
a connection plate (152) mechanically and electrically coupling the body of the first battery terminal (120) to the cap plate (151); and
a sealing gasket (156) mechanically coupling and electrically insulating the body of the second battery terminal (130) to and from the cap plate (151),
**characterized in that**
the rotation-preventing member of the first battery terminal (120) is a first rotation-preventing groove or a first rotation-preventing protrusion (123d) mating with a corresponding first protrusion or a corresponding first groove (151c), respectively, of the cap plate (151).

2. The rechargeable battery of claim 1, wherein the body (122a, 132a) is fixed to the coupling terminal (123, 133).

3. The rechargeable battery of claim 1 or 2, wherein the coupling terminal (123, 133) further has a base portion (123a, 133a) and an extending portion (123b, 133b) that has the thread (123c, 133c), the collecting terminal hole (123e, 133e) passing through the base portion (123a, 133a) and the extending portion (123b, 133b), the base portion (123a, 133a) having a larger diameter than that of the extending portion (123b, 133b).

4. The rechargeable battery of claim 1, wherein with respect to the second battery terminal (130):
the cap assembly (150) further comprises an insulating member (157) electrically insulating the coupling terminal (123) from the cap plate (151);
the rotation-preventing member is a first rotation-preventing groove (133d) or a first rotation-preventing protrusion mating with a corresponding first protrusion (157b) or a corresponding first groove, respectively, of the insulating member (157); and
the insulating member (157) has a first rotation-preventing member for preventing rotation with respect to the cap plate (151).

5. The rechargeable battery of claim 4, wherein the first rotation-preventing member is a second rotation-preventing groove or a second rotation-preventing protrusion (157a) in or on the insulating member (157) and mating with a corresponding second protrusion or a corresponding second groove (151d), respectively, of the cap plate (151).

6. The rechargeable battery of claim 4, wherein the cap assembly (150) further comprises an insulating lid (158) electrically insulating a side of a base portion (133a) of the coupling terminal (133).

7. The rechargeable battery of claim 6, wherein
the insulating lid (158) has an insulating lid protrusion (158a), and
the base portion (133a) has a coupling groove (133g) mating with the insulating lid protrusion (158a) and mechanically coupling the insulating lid (158) to the side of the base portion (133a) and to the insulating member (157).

## Patentansprüche

1. Eine wiederaufladbare Batterie (100), aufweisend:
eine Elektrodenanordnung (110);
einen Batterieanschluss (120, 130), der mit der Elektrodenanordnung (110) elektrisch gekoppelt ist;
ein Gehäuse (140), das die Elektrodenanordnung (110) aufnimmt; und
eine Abdeckanordnung (150), die eine Abdeckplatte (151) zum Abdichten des Gehäuses (140) aufweist,
wobei der Batterieanschluss (120, 130) aufweist:
eine Sammelplatte (121, 131), die mit der Elektrodenanordnung (110) elektrisch gekoppelt ist;
einen Sammelanschluss (122, 132), der mit der Sammelplatte (121, 131) elektrisch gekoppelt ist, wobei der Sammelanschluss (122, 132) einen Körper (122a, 132a), der durch die Abdeckplatte (151) hindurchgeht, aufweist; und
einen Kopplungsanschluss (123, 133), der mit dem Körper (122a, 132a) elektrisch und mechanisch gekoppelt ist,
wobei der Kopplungsanschluss (123, 133) aufweist:
ein Sammelanschlussloch (123e, 133e) zum Hindurchführen des Körpers (122a, 132a) durch dieses;
ein Gewinde (123c, 133c) zum elektrischen Koppeln des Kopplungsanschlusses (123, 133) mit einer weiteren wiederaufladbaren Batterie oder einer externen Vorrichtung; und
ein Drehverhinderungselement, wobei
die Batterie einen ersten Batterieanschluss (120) und einen zweiten Batterieanschluss (130) aufweist, und
die Abdeckanordnung (150) ferner aufweist:
eine Verbindungsplatte (152), die den Körper des ersten Batterieanschlusses (120) mechanisch und elektrisch mit der Abdeckplatte (151) koppelt; und
eine Dichtung (156), die den Körper des zweiten Batterieanschlusses (130) mechanisch mit der Abdeckplatte (151) koppelt und elektrisch von dieser isoliert,
**dadurch gekennzeichnet, dass**
das Drehverhinderungselement des ersten Batterieanschlusses (120) eine erste Drehverhinderungsnut oder ein erster Drehverhinderungsvorsprung (123d), die/der jeweils mit einem entsprechenden ersten Vorsprung oder einer entsprechenden ersten Nut (151c) der Abdeckplatte (151) zusammenpasst, ist.

2. Die wiederaufladbare Batterie nach Anspruch 1, wobei der Körper (122a, 132a) am Kopplungsanschluss (123, 133) befestigt ist.

3. Die wiederaufladbare Batterie nach Anspruch 1 oder 2, wobei der Kopplungsanschluss (123, 133) ferner einen Basisabschnitt (123a, 133a) und einen Erstreckungsabschnitt (123b, 133b), der das Gewinde (123c, 133c) aufweist, aufweist, wobei das Sammelanschlussloch (123e, 133e) durch den Basisabschnitt (123a, 133a) und den Erstreckungsabschnitt (123b, 133b) hindurchgeht, wobei der Basisabschnitt (123a, 133a) einen größeren Durchmesser als denjenigen des Erstreckungsabschnitts (123b, 133b) aufweist.

4. Die wiederaufladbare Batterie nach Anspruch 1, wobei bezüglich des zweiten Batterieanschlusses (130):
die Abdeckanordnung (150) ferner ein Isolierelement (157), das den Kopplungsabschnitt (123) elektrisch von der Abdeckplatte (151) isoliert, aufweist;
das Drehverhinderungselement eine erste Drehverhinderungsnut (133d) oder ein erster Drehverhinderungsvorsprung, die/der jeweils mit einem entsprechenden ersten Vorsprung (157b) oder einer entsprechenden ersten Nut des Isolierelements (157) zusammenpasst, ist; und
das Isolierelement (157) ein erstes Drehverhinderungselement zum Verhindern einer Drehung bezüglich der Abdeckplatte (151) aufweist.

5. Die wiederaufladbare Batterie nach Anspruch 4, wobei das erste Drehverhinderungselement eine zweite Drehverhinderungsnut oder ein zweiter Drehverhinderungsvorsprung (157a) in oder auf dem Isolierelement (157), die/der jeweils mit einem entsprechenden zweiten Vorsprung oder einer entsprechenden zweiten Nut (151d) der Abdeckplatte (151) zusammenpasst, ist.

6. Die wiederaufladbare Batterie nach Anspruch 4, wobei die Abdeckanordnung (150) ferner einen Isolierdeckel (158), der eine Seite eines Basisabschnitts (133a) des Kopplungsanschlusses (133) elektrisch isoliert, aufweist.

7. Die wiederaufladbare Batterie nach Anspruch 6, wobei
der Isolierdeckel (158) einen Isolierdeckelvorsprung (158a) aufweist, und
der Basisabschnitt (133a) eine Kopplungsnut (133g), die mit dem Isolierdeckelvorsprung (158a) zusammenpasst und den Isolierdeckel (158) mechanisch mit der Seite des Basisabschnitts (133a) und des Isolierelements (157) koppelt, aufweist.

## Revendications

1. Batterie rechargeable (100) comprenant :
un ensemble d'électrodes (110) ;
une borne de batterie (120, 130) couplée électriquement à l'ensemble d'électrodes (110) ;
un boîtier (140) recevant l'ensemble d'électrodes (110) ; et
un ensemble capuchon (150) comprenant une plaque de capuchon (151) pour assurer l'étanchéité du boîtier (140),
dans laquelle la borne de batterie (120, 130) comprend :
une plaque collectrice (121, 131) couplée électriquement à l'ensemble d'électrodes (110) ;
une borne collectrice (122, 132) couplée électriquement à la plaque collectrice (121, 131), la borne collectrice (122, 132) ayant un corps (122a, 132a) passant à travers la plaque de capuchon (151) ; et
une borne de couplage (123, 133) couplée électriquement et mécaniquement au corps (122a, 132a),
dans laquelle la borne de couplage (123, 133) a :
un trou de borne collectrice (123e, 133e) pour faire passer le corps (122a, 132a) à travers celui-ci ;
un filetage (123c, 133c) pour coupler électriquement la borne de couplage (123, 133) à une autre batterie rechargeable ou à un dispositif externe ; et
un élément d'empêchement de rotation, où
la batterie comprend une première borne de batterie (120) et une deuxième borne de batterie (130), et l'ensemble capuchon (150) comprend en outre :
une plaque de liaison (152) couplant mécaniquement et électriquement le corps de la première borne de batterie (120) à la plaque de capuchon (151) ; et
un joint d'étanchéité (156) couplant mécaniquement et isolant électriquement le corps de la deuxième borne de batterie (130) à et de la plaque de capuchon (151),
**caractérisée en ce que**
l'élément d'empêchement de rotation de la première borne de batterie (120) est une première rainure d'empêchement de rotation ou une première saillie d'empêchement de rotation (123d) s'accouplant avec une première saillie correspondante ou une première rainure (151c) correspondante, respectivement, de la plaque de capuchon (151).

2. Batterie rechargeable de la revendication 1, dans laquelle le corps (122a, 132a) est fixé à la borne de couplage (123, 133).

3. Batterie rechargeable de la revendication 1 ou 2, dans laquelle la borne de couplage (123, 133) a en outre une partie de base (123a, 133a) et une partie d'extension (123b, 133b) qui présente le filetage (123c, 133c), le trou de borne collectrice (123e, 133e) passant à travers la partie de base (123a, 133a) et la partie d'extension (123b, 133b), la partie de base (123a, 133a) ayant un diamètre supérieur à celui de la partie d'extension (123b, 133b).

4. Batterie rechargeable de la revendication 1, dans laquelle en ce qui concerne la deuxième borne de batterie (130) :
l'ensemble capuchon (150) comprend en outre un élément isolant (157) isolant électriquement la borne de couplage (123) de la plaque de capuchon (151) ;
l'élément d'empêchement de rotation est une première rainure d'empêchement de rotation (133d) ou une première saillie d'empêchement de rotation s'accouplant avec une première saillie (157b) correspondante ou avec une première rainure correspondante, respectivement, de l'élément isolant (157) ; et
l'élément isolant (157) a un premier élément d'empêchement de rotation pour empêcher la rotation par rapport à la plaque de capuchon (151).

5. Batterie rechargeable de la revendication 4, dans laquelle le premier élément d'empêchement de rotation est une deuxième rainure d'empêchement de rotation ou une deuxième saillie d'empêchement de rotation (157a) dans ou sur l'élément isolant (157) et s'accouplant avec une deuxième saillie ou une deuxième rainure (151d) correspondante, respectivement, de la plaque de capuchon (151).

6. Batterie rechargeable de la revendication 4, dans laquelle l'ensemble capuchon (150) comprend en outre un couvercle isolant (158) isolant électriquement un côté d'une partie de base (133a) de la borne de couplage (133).

7. Batterie rechargeable de la revendication 6, dans laquelle
le couvercle isolant (158) a une saillie de couvercle isolant (158a), et
la partie de base (133a) a une rainure de couplage (133g) s'accouplant avec la saillie de couvercle isolant (158a) et couplant mécaniquement le couvercle isolant (158) au côté de la partie de base (133a) et à l'élément isolant (157).
